# EUROPEAN PATENT APPLICATION

(11) **EP 0 816 989 A2**
(43) Date of publication of application: **07.01.1998**
(21) Application number: 97303513.2
(22) Date of filing: 22.05.1997
(51) Int. Cl.: G06F 3/023

(54) **Configurable computer input device**

(30) Priority: 14.09.1996 GB 9619269; 16.09.1996 GB 9619292; 06.07.1996 GB 9614243
(71) Applicant: Saitek Limited, Kwun Tong (HK)
(72) Inventor: Inwood, David John, Buckover, Gloucestershire GL12 8DX (GB); Ryan, Paul, Huntingdon, Cambridgeshire PE17 5AQ (GB); Gibbons, Christopher F., Villas Caquecoy House F., Clearwater Bay, New Territories (HK); Winkler, Eric Ernest, Rudgeway, Bristol BS12 2SD (GB); Gibbons, Nicholas Graham, Rancho Palos Verdes, CA 90275 (US); Sun, Peter Ka Tai, Shatin, New Territories (HK)
(74) Representative: Morton, Colin David

(57) **Abstract**

An accessory device for a computer system, comprising a casing (30) with an openable apertured lid (32) beneath which an overlay (36) can be inserted to cover membrane switches (34), the overlay being marked on its front face with switch operating areas in use exposed through the aperture in the lid and bearing a bar-code on its back readable by a bar-code scanner (38) within the accessory device in order to configure the switches for enabling easier control of a particular program running on the computer to which the overlay card has been tailored. (Figure 3)

## Description

### Field of the Invention

This invention relates generally to computer systems comprising, as a minimum, a computer and a monitor. More especially, although not exclusively, the invention concerns systems based on IBM compatible PCs, and relates more specifically to an accessory device for use therewith.

### Background to the Invention

The general aim of the invention is to simplify the manner in which the user is able to control the software running on a computer, being software conventionally controlled by a keyboard, mouse or joystick, for example.

Thus, when some games or draughting (CAD) programs are executed on a computer, the user may be required to press combinations of keys on the keyboard in order to perform certain operations in the game or draughting program. The keyboard, which is designed for typing, is not well suited to pressing various combinations of keys and, in any event, the combinations, which vary considerably from one game or draughting program to another, are not readily remembered. One specific object of the invention is to provide a solution to this problem. However, the invention is not limited to controlling operation of games and draughting programs on the computer; it may alternatively be employed to assist operations to be performed in application programs relating to general business and niche computer fields.

Enlarging on the above, it will be well understood that, over recent years, the PC has become an excellent platform for playing games and other forms of leisure software. The advances that have facilitated this relate to improved graphics, sound and processing power, all of which lead to a greater sense of involvement and reality which the player experiences. However, as games themselves have become more complex and more realistic, the means by which the player controls the game have also become more complex. Certain dedicated games controllers have been invented which greatly improve game play. The most useful types are proportional devices, such as joysticks, which allow the player to control movement within the game. In many PC games (and other PC software), however, the keyboard has become a very important means of controlling important aspects of such software. For example, in a flying simulation game, whilst the joystick may control the main action (direction and often speed as well), the keyboard frequently is used for every other form of control, often controlling the views on screen, the engine and navigation controls, etc. These games have grown in complexity to the point where several dozen keyboard commands are frequently needed to control important aspects of the game. To further complicate matters, these keyboard commands are often complex keystroke sequences and combinations. The use of double or even triple simultaneous key-presses is common, as is the use of sequences of two or more keys. Whilst games writers may try to use keys that have some numeral or alphabetic connection with the aspect of the game being controlled, this is often not possible, leaving the player with the task of memorising not only what aspects of the game are amenable to external control, but the exact keyboard commands for achieving the actions needed.

The situation has therefore arisen that games, which frequently require a very fast response from the player, are being largely controlled using the PC keyboard. As mentioned above, this is based on the typewriter, which itself was modified very early in its life to slow typists down from the speed at which they could naturally input keystrokes. Thus a fast, modern and realistic games platform (the PC) is being controlled by a device whose layout was designed to slow down the human operator.

Alternative control means are also in use, most notable being the mouse. This is undoubtedly a useful input device in many situations, but it does require the user's most accurate hand being removed from its normal action in the software being controlled (be that the keyboard or, more frequently in games, the joystick). This also slows users down.

The invention has, for its aims, at least to minimise the following problems:
- the need to learn the controls associated with the software in use
- the need to learn the keyboard sequences needed to initiate each of the controls
- the fact that the keyboard has a large number of keys (typically 105) and that these are not laid out in a fashion intuitive for playing games, and
- the fact that the player's concentration is normally focused on the graphics on the PC screen and the shift of concentration to a non-graphical control interface diminishes the player's visual concentration.

The invention further seeks to provide an economical solution to these problems which is simple to set-up and operate, and very economical for users to adapt for virtually any software application that requires user control. In a preferred embodiment, the device in accordance with the invention emulates keyboard controls, but the device could equally well be applied to situations which require other forms of input (e.g. mouse actions), which cause the player to interrupt the main type of control in use.

### The Invention

According to the invention, in a broad aspect, there is provided an accessory device for a computer by which instructions can be given to the computer for the control of software running on the computer, the device comprising switching means over which an interchangeable overlay can be inserted into the device, said overlay being marked with switch-operating areas and with configuration information, reading means by which the configuration information on the overlay can be read and a port via which switch operations are communicatable to the computer to control the software in accordance with the configuration information.

In a preferred embodiment, the device also includes microprocessor means for interpreting the configuration information so that switch operations cause signals to be sent to the computer for control of the software running thereon.

Alternatively, however, a supplementary device-communicating program may be provided in the computer, for controlling a main program running on the computer in accordance with switch operation signals sent to the supplementary program by the accessory device. The supplementary program is then required to interpret the configuration information carried by the overlay, and for this purpose the device may communicate this configuration to the computer or the configuration information or information corresponding thereto may be pre-loaded into the computer.

According to another aspect of the invention, therefore, there is provided a computer system comprising a computer and an accessory device, the device comprising a pattern of switches over which an interchangeable overlay can be inserted into the device, said overlay being marked with switch-operating areas and with configuration information, means being provided for interpretation of the configuration either in the device or in the computer, and a port via which switch operations are communicated to the computer to control software running on the computer in accordance with the configuration information.
When the interpretation means is provided in the device, the latter includes a microprocessor incorporating an algorithm for interpreting the configuration information carried by the overlay. When the interpretation means is provided in the computer, the system includes a device-communicating supplementary program in the computer in addition to or possibly forming part of the main program being run. This supplementary program may include an algorithm for interpreting the configuration information, which information is communicated to it by the accessory device. In a modification, however, the configuration information, or information related thereto, is pre-loaded into the computer for use by the supplementary program.

In still another aspect, the invention provides an overlay card for use in a computer accessory device having a switching pattern over which the overlay card is to be received, the overlay card having areas marked with switch-operating information and bearing machine-readable configuration information indicative of a relationship between the marked areas of the card and signals to be produced, either by the accessory device or a computer to which it is connected, for controlling the running of a particular computer program.

In all aspects of the invention, the configuration information carried by the overlay card may be in the form of a readable printed code or number or a code or number in the form of cut-outs, to be read optically or mechanically. However, the configuration information may instead contain the code or number in an electrically or electronically readable form, e.g. magnetic or capacitative information. Yet again, the readable configuration code or number may be contained within an electronic device embedded within the overlay.

As distinct from the positions themselves, it may be the movement of the locations of pressure on the switch-operating areas of the overlay card which is translated, by the device itself or by the supplementary program in the computer, into controlling commands or signals for the software being run on the computer.

The system may include two or more peripheral devices as aforesaid, each for connecting to the computer or to one another with only one for connecting to the computer, so that multiple users are able simultaneously to control the software running on the computer. In such a situation it is not essential that the two or more devices should receive identical overlays, although clearly each overlay will be designed to apply to the software which is being controlled.

In many cases, the overlay card and its configuration information will be such that application of pressure at a single switch-operating area of the card will result in a software-controlling command which is representative of multiple operations or commands from a conventional input device which the device is emulating, e.g. a single press on the overlay card will correspond to multiple keystrokes on a keyboard.

Generally, the switch-operating areas of the overlay card will carry graphical or other command representative markings of the functions of the respective areas. Interchangeable graphical overlays with which the user interacts, either in a stand-alone configuration or as part of a computer system, are in themselves known. In the present invention, however, the overlay itself carries the configuration information which adapts the card for use in controlling a particular software program.

It should also be mentioned that, due to the constraints of many IBM compatible PCs and the very many games and other application programs which can be run, it is not always possible directly to make the translated data available at the interface port in a way that deceives the program into reading it as genuine instructing data.

According to a further feature of the invention therefore, commands deriving from the switch pattern or matrix in the device are sent back from the data interface port in the computer to the accessory device, where the commands are reflected back to this interface port as if constituting original instructing data from a conventional instructing device which the accessory device is emulating. This is preferably achieved by transmitting the initial signals from the switching means, the translated instructing data and the reflected instructing data with appropriate headers.

The switching means in the accessory device and with which the overlay cooperates may be of several types, such as mechanical contacts, including membrane switches, as generally preferred, or capacitative switches. Alternatively, this switching means may take the form of a two-dimensional digitiser type sensor which is sensitive to pressure, as by means of contact between switching layers, such as orthogonally spaced resistive layers. The position of contact can be deduced by potentiometric action in each layer.

This creates the possibility of a modification in which the switch matrix is also carried by the overlay card.

According to a still further aspect of the invention, therefore, there is provided an overlay card for use in an accessory device for a computer, the overlay card having a switch pattern incorporated, the card being marked with areas for enabling operation of the switches within the pattern, the card also bearing machine-readable configuration information indicative of a relationship between marked areas of the card and signals to be produced, either by the accessory device itself or by the computer to which the device is connected, for controlling the running of a particular computer program.

The invention furthermore relates to an accessory device adapted to receive this modified overlay card and to a computer system in which the accessory device adapted to receive the modified overlay card is connected.

### Description of Drawings

The invention, in a preferred embodiment, is further described with reference to the accompanying drawings, in which:-
**Figure 1** shows a system equipped with the accessory device, in diagrammatic manner;
**Figure 2** shows an example of the accessory device, in pictorial manner;
**Figure 3** is a diagrammatic side elevational view of a preferred device;
**Figure 4** is a functional block diagram of the preferred device;
**Figure 5** shows an exemplary overlay card; and
**Figure 6** shows PC-Dash key numbering, for assisting understanding the operation of the device.

### Description of Embodiments

For convenience, in the following description, the accessory device of the invention is referred to as PC-Dash.

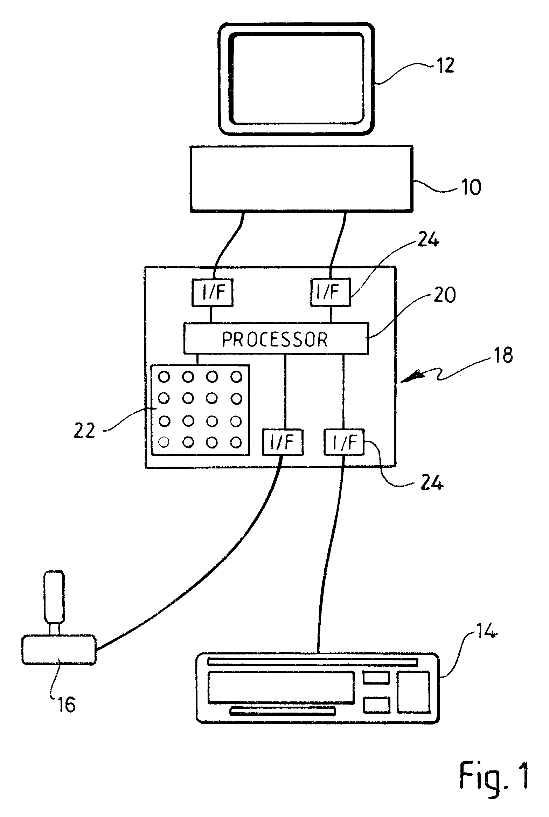

Referring to Figure 1, the computer 10 is equipped with monitor 12, keyboard 14 and joystick 16. However, the keyboard 14 and joystick 16 connect to the computer via PC-Dash 18.

PC-Dash 18 includes a processor 20, switching means 22 and I/O ports 24. Although the drawing shows two, there may be only one output port 24 connecting to the computer, usually but not necessarily to the keyboard port of the computer or USB port of a computer.

In use, during the running of an application program such as a game or draughting program controllable by means of the keyboard 14 and joystick 16, the switching means 22 can be operated to simulate, modify, replace or add to instructions being forwarded from the keyboard and joystick to the computer, appropriate to the particular application being run on the computer.

PC-Dash 18 is reconfigurable so that, according to the application being run on the computer 10, the switching means 22 performs different functions.

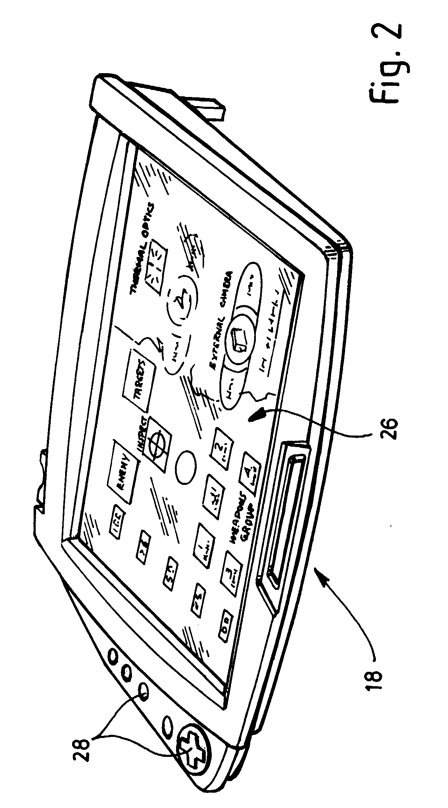

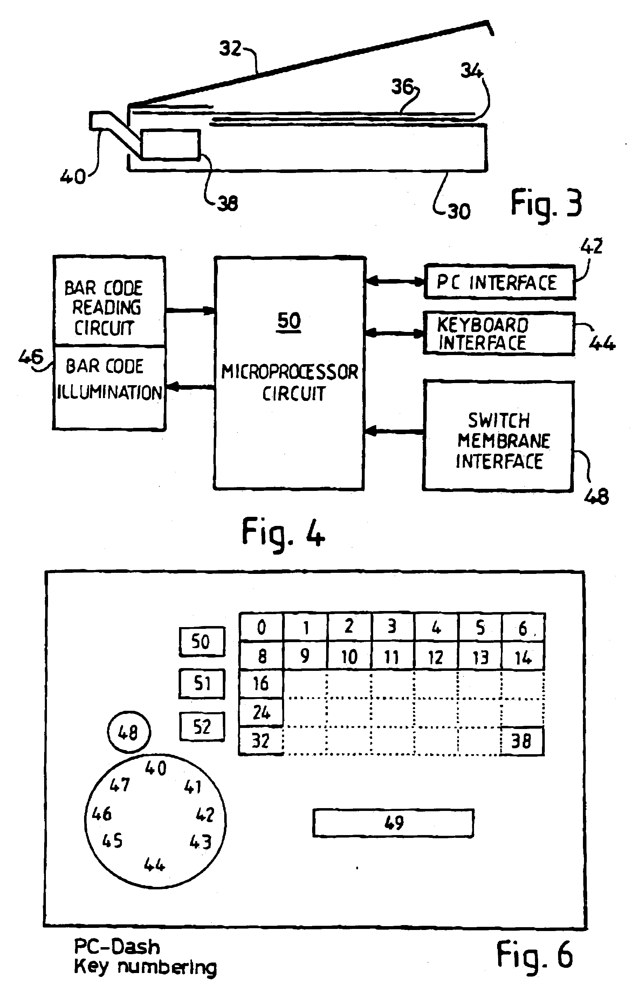

In the pictorial example of PC-Dash 18 shown in Figure 2, an overlay card 26 carries the switching means 22, which may be in the form of a digitiser-type sensor as hereinbefore mentioned. The casing of PC-Dash provides for substitution of different overlay cards appropriate to different games or other application programs being run on the computer. The illustrated card 26 is suited to one game, and has switches and associated graphic legends arranged accordingly. PC-Dash also includes non-substitutable control switches 28. It should be made clear, however, that in a preferred device later described with reference to Figure 3, the switching means such as 22 is provided on the device 18 itself, in which case the cards 26 are printed overlays also bearing machine-readable reconfiguration data.

Overlay cards may be substitutable beneath an openable lid of the casing of PC-Dash and a hinged latch secures the card in position, thereby establishing all necessary electrical connections between electrical components within the casing, including the processor and I/O ports, and the switches provided on the card.

The overlay card also bears data read by a card reader (not shown but as hereinafter explained) when the card is inserted, whereby corresponding switches in different cards may perform different functions in the running of different applications. The data read by the card reader are fed to the processor 20 within PC-Dash so that the appropriate functions, which determine the instructions sent to the computer running the application, may be recalled from a memory associated with the processor. Alternatively, however, the overlay card covers all the information required for reconfiguration, and not simply a code which recalls a predefined reconfiguration from memory.

As far as use continues to be made for some purposes of the keyboard and/or joystick, the device may serve to transmit these instructions to the computer unchanged, or it may act to modify these instructions to suit the program which is being run.

A preferred form of PC-Dash is shown in Figure 3.

The device itself consists of a main cabinet 30, with a hinged lid 32 in which there is a large aperture; the cabinet is approximately 330 x 240 x 40 mm in size (this size being chosen to allow the cards to fit easily within a standard software retail pack), with the lid aperture being approximately 220 x 150 mm. On the top surface of the cabinet, in the area revealed by the aperture in the lid, there is a touch-sensitive membrane 34; in operation, interchangeable overlay 36 is located beneath the lid 32, on top of the membrane.

Within the cabinet, there is an optical bar-code reading device 38, connected to a short handle 40; the cabinet has a small aperture through which the top section of the overlay protrudes into the body of the main cabinet. The underside of the overlay is printed with markings making up a bar-code, across which the bar-code read head can be moved by the user by means of the read head handle 40 which protrudes through a slit in the back of the main cabinet.

The main cabinet also has mounted on it (on the side) a connector into which the lead from the keyboard plugs; emanating from a hole in the side of the cabinet is a lead which terminates in a connector which plugs into the PC's keyboard socket.

In addition to the switch membrane 34, the device has nine other control buttons not covered by the overlay, which can also be configured by the data in a bar-code to generate any desired command.

PC-Dash draws all its electrical power from the PC (in this case the keyboard port), and this is also used to power the keyboard (if attached).

Referring to Figure 4, the main functional blocks are the PC interface 42, the keyboard interface 44, the bar-code reading electronics 46, the switch membrane interface 48 and the microprocessor 50 with its associated components.

The PC keyboard interface 42 is well defined for IBM-compatible PCs, and will not be described in detail here. The switch membrane 48 in this case acts simply like a 7 x 5 array of normally-open switches, and this array is read by the well-established key-matrix scanning technique. The microprocessor 50 in the preferred embodiment is an 80C52 (or equivalent) microcontroller, with 8k bytes of mask ROM and 256 bytes of internal RAM, plus a further 8k bytes of external RAM.

The bar-code reading electronics 46 consists of five LEDs with a single photodetector which is connected to an amplifier and analog-to-digital converter. The 5 LEDs are directed by the physical read head at 5 different "channels" of bar-code on the overlay, and are illuminated in turn; the photodetector has a field of view which includes all 5 channels, and detects the light reflected off the surface of the overlay in each channel in turn as it is illuminated. The amount of light detected is proportional to the electrical current generated by the photodetector, which is related to the colour of the overlay at that point; this electrical signal is amplified and fed to the microprocessor through the analog-to-digital converter. The bar-code electronics also includes a switch which detects whether the bar-code read head is "parked" or in use.

When PC-Dash is first attached to the computer, it behaves like an ordinary keyboard, except that it has only 44 keys, each of the keys producing an effect identical to the pressing of a key on the keyboard when pressed.

An overlay 36 is then placed in the device as described above, and the bar-code read head scanned across its width. The algorithm contained within the microprocessor ROM is used by the microprocessor to decode the configuration data from the bar-code, and once the read head has been returned to the "parked" position, pressure on the switch membrane will result in the transmission of a string of simulated keystrokes, as defined by the data in the barcode.

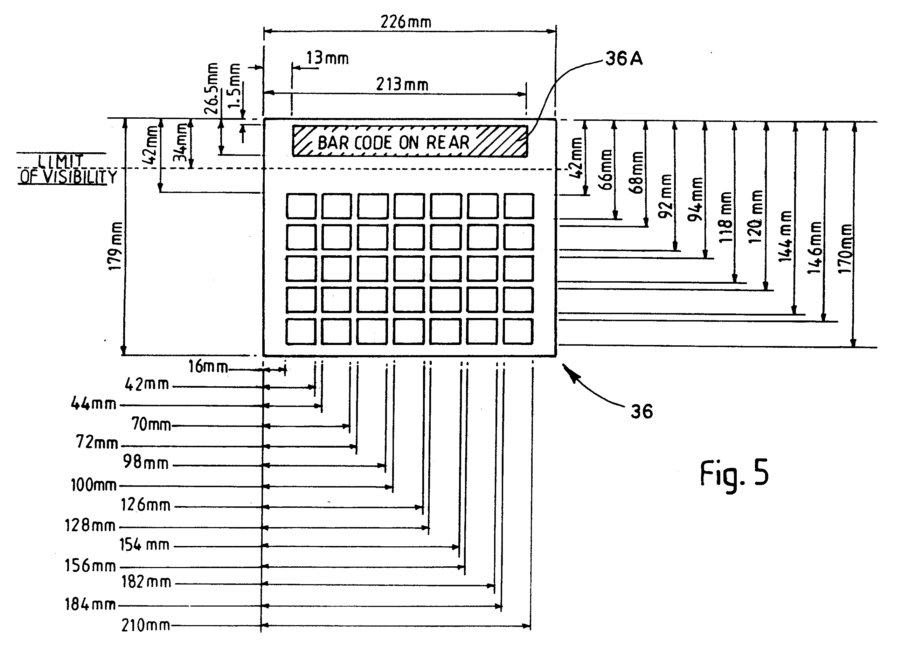

Figure 5 shows an exemplary overlay card 36, including the bar-code 36A on the back. The overall size of the card is 226mm wide by 179mm high. When in use, the top 34mm of the card is hidden by the card reading mechanism, and a border of 4mm at the bottom and each side of the card is hidden by the lid 32. The main area of the card is a rectangular matrix or array of thirty-five switches, the dimensions of the switches from the card edges being given in Figure 5.

The switches consist of:-
* main fire button (bottom centre)
* second fire button (just above the direction pad)
* 8 direction pad
* 3 "function modifier" switches with individual LEDs

All switches may be programmed for:-
* key sequence on key-press (eg [Alt][R])
* Key sequence on key release
* key sequence repeated during key-down (ie auto-repeat) eg + + + + + + + +
* key sequence toggle (each time it is pressed the next sequence is issued, eg [1] [2] [3] ...[1], [2]... etc)
* main keypad area only may also have up to 4 different actions programmed, normal and with 1st, 2nd, or 3rd function modifier ("shift") keys pressed. If this feature is used, the shift keys must not be assigned their own key sequences.

The total number of keystrokes that can be programmed using a barcode is limited to about 120 (where [shift][key] or [ctrl][key] would each count as 2 keys). Use of function modifier keys reduces this by about 1 character for each use.

Operation and use of PC-Dash will now be described in more detail.

In normal operation, PC-Dash reads data off the bar-codes on the back of the overlays. It then behaves exactly as if it were a keyboard, except it can issue complex strings of keystrokes at a single key press.

PC-Dash is enabled with other ways of working; e.g. when the programming information is too complex to fit onto a bar-code. The way PC-Dash works under these circumstances depends upon the operating system:-

### In DOS

The software places the PC-Dash files in special directories and loads a small program (a TSR) which must be invoked with the game-file name to work. This may be done in the AUTOEXEC.BAT file or later before the game is run.

### In Windows 3.1

The software changes the setup in a number of ways:-
- it loads the PC-Dash files in special directories
- it creates a special "loader" program in the START group which automatically loads the last configuration when Windows is booted
- it creates a special program group for the PC-Dash programming interface which allows fully interactive programming of PC-Dash
- and finally it replaces the current keyboard driver with a special driver.

### In Win95

The software changes the setup in the following ways:-
- it loads the PC-Dash files in special directories
- it creates an auto-loader which loads the last-used configuration on boot
- it allows re-mapping of the keyboard through the hardware abstraction layer.

In order to give a simplified overview of the operation of PC-Dash the operating process is depicted in Table A appended hereto.

In all modes the PC-Dash behaves completely transparently to data strings to and from the keyboard. Instructions from the PC intended for the PC-Dash are identified by the appropriate header. When not in use the unit may therefore be left connected and stored next to the PC.

"Alpha" mode is entered in one of two ways:-
i) If the first action on PC-Dash after boot-up is to press a key, the system sets itself automatically into this mode, or
ii) If the unit is set into this mode by a "Set PC-Dash Mode" command from the PC

In the latter mode runs the PC-Dash provides a pre-programmed set of simple keystrokes. The shift-keys operate as simple function keys and no shift-pages are available. In this mode it is not possible to distinguish between multiple units on the same keyboard line.

"Barcode" mode is initiated by the act of scanning a card. As soon as the scan-head is moved from its parking position at the top left of PC-Dash the unit will cease to function other than as a scanner.

The read-head should be drawn evenly from one side of the unit to the other and then returned to the parking position. The result of the scan is indicated to the user by beep codes.
- One beep: - scan successful, data loaded into memory, unit ready to continue
- Two slow beeps: - scan too slow, retry
- Two fast beeps: - scan too fast or speed variation too great, retry
- Three beeps: - data error, retry

In full data bar-code mode a card is loaded and scanned, and the bar-code contains all the information necessary to program the keys. PC-Dash responds to key strokes by transmitting the programmed character string. The bar-code is accurately placed on the back of the card to optimise scanning.

This mode allows the use of multiple PC-Dashes on the same keyboard line, e.g. for multi-player games (providing the actions of each player are governed by unique character strings), or for multi-function games (where for instance in a combat flight game the offensive and navigational sets of functions could be on different sets of cards), or for complex flight simulators (where different cards are supplied for each type of aircraft simulated).

Identifier bar-code mode runs when a card is loaded and scanned, and the software has been configured (or Win95 or DirectX drivers) to recognise the header (a special identifier byte) in front of default keystrokes. The bar-code on the card only carries data identifying the software package. Once PC-Dash recognises such information, it will respond to keystrokes by transmitting the header followed by the default keystroke. This allows the use of multiple PC-Dashes on the same keyboard line for multi-player games or multi-function games because the header contains device identification information.

Where multiple PC-Dashes are used the software is required to establish the ID of each machine at boot.

"TSR/Native" mode is a special mode, primarily for use in DOS, in which PC-Dash functions with a supplied TSR program which allows the functions specified for each switch to be defined and changed directly from the PC. The PC-Dash is put into this mode by using the "Set PC-Dash Mode" command. Thereafter it transmits all the switch IDs preceded by an identifier string which also contains a Device ID (thus allowing multiple units to work together).

PC-Dash can operate in two ways in this mode.

When operating under TSR operation PC-Dash only requires a "look-up" table of the functions specific to the game. This is loaded by the TSR which then takes the switch ID and uses a special table to generate the character string to be associated with that key, and this is transmitted back to the PC-Dash, which strips off the header and resends it to the PC where it enters the keyboard buffer.

No changes are required to games software in this mode, but the look-up table used by the TSR is complex and is generated by a GUI.

When operating in Native mode the PC-Dash transmits the key-press information preceded by the header. This is recognised directly by the software and no further action is required. The software can be enabled to support multiple PC-Dashes using the Device ID.

The key identities are the hexadecimal equivalents of the key numbers used in the ASCII file for generating bar-codes.

The keys on PC-Dash can be programmed to generate complex character strings on key-down and/or key-up using the simple form below. The bar-code compiler is not case sensitive, so capitals are defined using the "shift" key. Everything on that line following a semi-colon is ignored to allow for easy documentation.

Each key is defined by a text string containing specific parameters. The simplest form is shown in the table below:-

| Generic form | Specific example |
|---|---|
| key n | key 5 |
| mode | normal |
| u v key-descriptor | 1 1 a |

where,
- n: is the number of the key. PC-Dash has key numbers 0 to 52 which are assigned as shown in Figure 6.
The numbering sequence is not continuous, but is as shown in the drawing of Figure 6.
If keys are not programmed they are omitted from the sequence, but all keys programmed are listed in the text file in ascending order. If more than one key is assigned to a single function, all keys so assigned are individually defined.
mode is the mode of operation of the key and can be one of the following types:-
- normal: - a single character, or character string, is sent just as a normal keyboard character would be sent
- Typematic: - a character, or a character string, is sent repeatedly as long as the key is held down (just as a typematic keyboard character would be sent)
- switch: - this toggles through a list of characters or character strings. The first press sends string 1, the second press sends string 2, etc. When the list has been completed the next press sends string 1.
- Nrelease: - allows the use of different characters or character strings for PC-Dash key-down and key-up.

In cases where the text file must contain a number of options for a key-press, the word "break" in the text file is used to identify the end of one option and beginning of the next.

u and v are controls which determine the precise key-down, key-up sequence according to Table B appended hereto.

key-descriptor is a character or character string giving a unique description of every key on the keyboard.

When multiple shift pages are programmed in the download mode, each shift page is saved as a separate file without the header and downloaded to the specific page using the controls in program.

A delay programming protocol enables the user to set PC-Dash to transmit normal keyboard key-down and key-up codes in response to a single PC-Dash key-up or key-down. For many PCs the transmission of key-down/key-up strings in such close proximity will result in an error. To alleviate this problem, PC-Dash can be programmed to insert a delay between the key-down and key-up strings by invoking the DELAY key function.

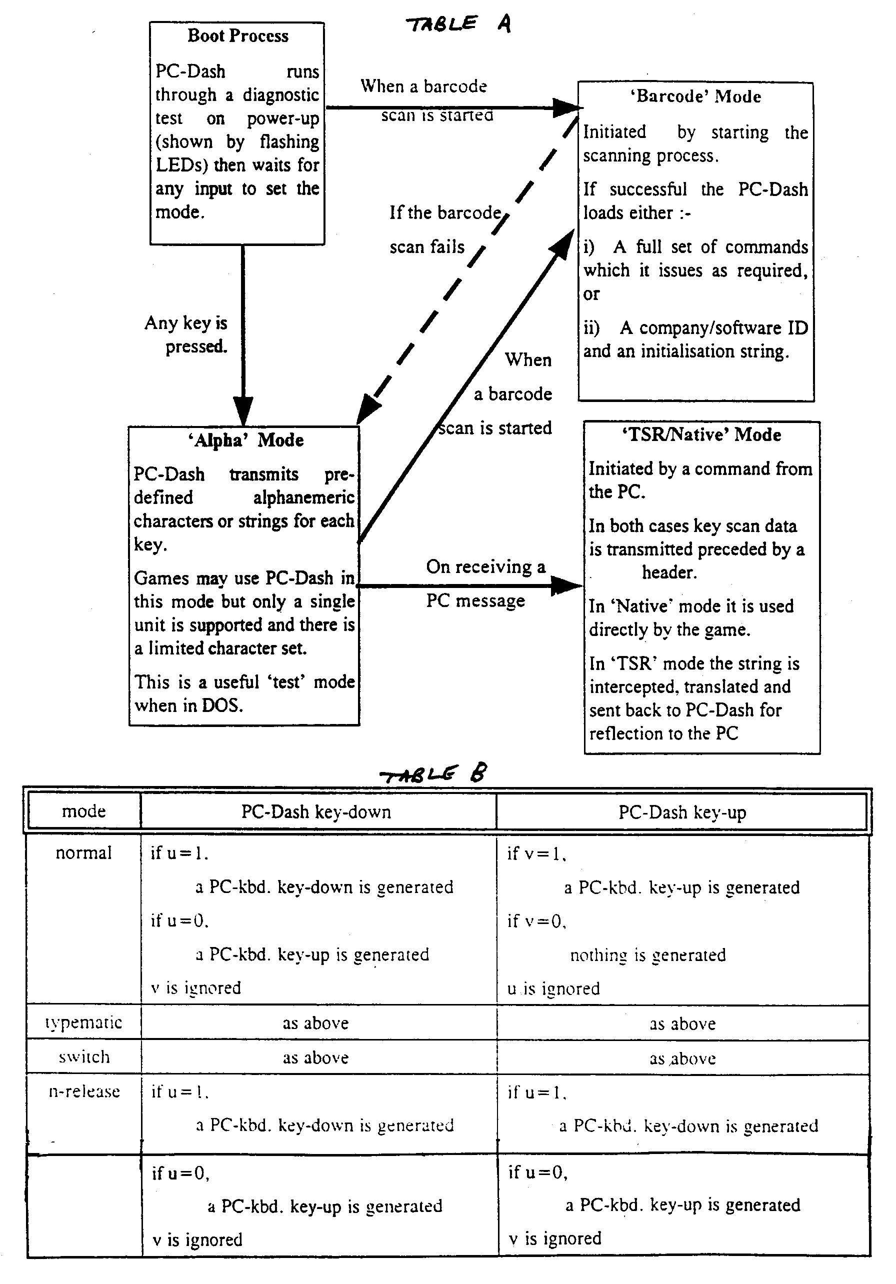

## Claims

1. An accessory device for a computer by which instructions can be given to the computer for the control of software running on the computer, the device comprising switching means over which an interchangeable overlay can be inserted into the device, said overlay being marked with switch-operating areas and with configuration information, reading means by which the configuration information on the overlay can be read and a port via which switch operations are communicatable to the computer to control the software in accordance with the configuration information.

2. A device according to claim 1, also including microprocessor means for interpreting the configuration information so that switch operations cause signals to be sent to the computer for control of the software running thereon.

3. A device according to claim 1, wherein the switching means in the accessory device and with which the overlay cooperates comprises a membrane switch.

4. A device according to claim 1, wherein the switching means comprises capacitative switches.

5. A device according to any of the preceding claims, wherein the switching means comprise a matrix or array of switches.

6. A device according to any of claims 1 to 5, wherein the interchangeable overlay bears configuration information in the form of a bar-code, and a bar-code reader is provided in the device for reading the bar-code.

7. A device according to claim 6, wherein the bar-code reader comprises an optical head for scanning the bar-code along its length.

8. A device according to claim 7, wherein the bar-code reader is manually movable across the device for scanning the bar-code.

9. A device according to any of claims 1 to 8, having an openable apertured lid beneath which the overlay is inserted leaving the switch-operating areas exposed through the aperture in the lid when the lid is closed.

10. A device according to claim 9, wherein the bar-code is positioned along a marginal region on the back of the overlay and is aligned with the bar-code reader when the overlay is inserted in the device and the lid closed.

11. A device according to any of claims 1 to 10, having exposed switches which are additional to the switching means covered by the inserted overlay and at least some of which are also configured when the configuration information on the overlay is read.

12. A computer system comprising a computer and an accessory device, the device comprising a pattern of switches over which an interchangeable overlay can be inserted into the device, said overlay being marked with switch-operating areas and with configuration information, means being provided for interpretation of the configuration either in the device or in the computer, and a port via which switch operations are communicated to the computer to control software running on the computer in accordance with the configuration information.

13. A system according to claim 12, wherein the interpretation means is provided in the device and the latter includes a microprocessor incorporating an algorithm for interpreting the configuration information carried by the overlay.

14. A system according to claim 12, wherein the interpretation means is provided in the computer, and the system includes a device-communicating supplementary program in the computer in addition to or forming part of the main program being run.

15. A system according to claim 14, in which the supplementary program includes an algorithm for interpreting the configuration information, which information is communicated to it by the accessory device.

16. A system according to claim 14, in which the configuration information, or information related thereto, is pre-loaded into the computer for use by the supplementary program.

17. A system according to any of claims 12 to 16, including two or more peripheral devices, each for connecting to the computer or to one another with only one for connecting to the computer, so that multiple users are able simultaneously to control the software running on the computer.

18. A system according to any of claims 12 to 17, wherein the overlay card and its configuration information are such that application of pressure at a single switch-operating area of the card results in a software-controlling command which is representative of multiple operations or commands from a conventional input device which the accessory device is simulating.

19. A system according to claim 12, wherein commands deriving from the switch pattern in the device are sent back from the data interface port in the computer to the accessory device, where the commands are reflected back to this interface port as if constituting original instructing data from a conventional instructing device which the accessory device is simulating.

20. An overlay card for use in a computer accessory device having a switching pattern over which the overlay card is to be received, the overlay card having areas marked with switch-operating information and bearing machine-readable configuration information indicative of a relationship between the marked areas of the card and signals to be produced, either by the accessory device or a computer to which it is connected, for controlling the running of a particular computer program.

21. An overlay card according to claim 20, wherein the overlay card bears configuration information in the form of a readable printed code or number or a code or number in the form of cut-outs, to be read optically or mechanically.

22. An overlay card according to claim 21, wherein the configuration information is in the form of a bar-code.

23. An overlay card according to any of claims 20 to 22, wherein the switch-operating areas of the overlay card carry graphical or other command representative markings of the functions of the respective areas.

24. An overlay card for use in an accessory device for a computer, the overlay card having a switch pattern incorporated, the card being marked with areas for enabling operation of the switches within the pattern, and the card also bearing machine-readable configuration information indicative of a relationship between marked areas of the card and signals to be produced, either by the accessory device itself or by the computer to which the device is connected, for controlling the running of a particular computer program.

25. An accessory device for a computer system, in combination with an interchangeable switch overlay, the device having a switch pattern over which the overlay is positionable and the overlay being marked with switch operating areas corresponding to the switch pattern and with machine readable configuration information, the device also having a reader for reading the configuration information and for configuring the functions of the switches to facilitate control of a software program running on a computer to which the accessory device is connectable, the overlay having been configured specifically to relate to the said program.
